# EUROPÄISCHE PATENTSCHRIFT

(11) **EP 3 150 972 B1**
(45) Veröffentlichungstag und Bekanntmachung des Hinweises auf die Patenterteilung: **14.11.2018**
(21) Anmeldenummer: 16186905.2
(22) Anmeldetag: 01.09.2016
(51) Int. Cl.: G01D 13/26, G01L 19/12

(54) **ELEKTRONISCHER WINKELSENSOR FÜR ZEIGERINSTRUMENTE**
ELECTRONIC ANGLE SENSOR FOR POINTER INSTRUMENTS
CAPTEUR D'ANGLE ELECTRONIQUE POUR INSTRUMENTS A AIGUILLE

(30) Priorität: 01.09.2015 DE 102015011172
(43) Veröffentlichungstag der Anmeldung: 05.04.2017
(73) Patentinhaber: BAUMER ELECTRIC AG, 8500 Frauenfeld (CH)
(72) Erfinder: Zips, Alf, 8280 Kreuzlingen (CH); Brändle, Daniel, 8500 Frauenfeld (CH); Tiedeke, Joachim, 8280 Kreuzlingen (CH)
(74) Vertreter: Strauss, Steffen

(56) Entgegenhaltungen:
- DE-A1- 2 454 203
- DE-U1-202007 018 337
- US-A- 4 680 704
- US-A- 4 986 124
- US-A1- 2002 144 555
- US-A1- 2009 151 619

## Beschreibung

Die Erfindung betrifft einen elektronischen Winkelsensor für mit einem Zeiger versehene, von einer Vorderseite zu betrachtende Zeigerinstrumente, mit einer Sensoreinheit zur berührungslosen Erfassung einer Winkelstellung des Zeigers.

Mechanische Zeigerinstrumente werden bevorzugt zur optischen Kontrolle messbarer Prozessgrößen genutzt. Zur Integration besagter Zeigerinstrumente in eine Steuerung oder Regelung bzw. zur Anzeige des Erreichens von Grenzwerten können die ausschließlich mechanisch arbeitenden Zeigerinstrumente mit Schaltern ausgestattet sein, die fast ausschließlich mechanisch durch die Zeigerbewegung ausgelöst werden.

Die Herstellung derartiger Zeigerinstrumente ist aufgrund der komplizierten Mechanik, insbesondere bei verstellbaren Schaltpunkten, teuer

Es gibt daher Lösungen, die den Drehwinkel des Zeigers eines analogen Zeigerinstrumentes berührungslos erfassen und parallel zur Anzeige mit einem Zeiger in ein elektrisches Signal wandeln. Derartige Lösungen sind zum Beispiel aus der DE 10 2009 056 259 A1 oder der EP 1 850 096 A1 bekannt.

In beiden genannten Lösungen des Standes der Technik wird der Drehwinkel des Zeigers mit einem Hall-Sensor ermittelt. Mit diesem Hall-Sensor wird die Position eines am Zeiger bzw. dessen Drehachse befestigten Dauermagneten erfasst.

Diese Lösungen können nicht überall eingesetzt werden. Als Beispiel sei hier ein Hygrometer genannt, welches als Signalgeber ein Rosshaar nutzt. Eine Anbringung einer zusätzlichen Masse durch den Magneten wird bei einem solchen Hygrometer zu einer Verfälschung der Messung, wenn nicht sogar zur kompletten Verhinderung der Messung führen.

Die US 2009/151619 A1 beschreibt eine Vorrichtung zur Anzeige einer physikalischen Grösse, wie beispielsweise einem Druck, einer Temperatur oder einer Strömungsgeschwindigkeit mit einem beweglichen Zeiger. Die Vorrichtung umfasst hierzu eine Empfangsantenne und eine Sendeantenne. Die Sendeantenne erzeugt ein elektromagnetisches Feld in der Nähe des Zeigers, so dass ein elektrisches Signal in der Empfangsantenne induziert wird. Eine induktive Komponente in Form einer elektrischen Resonanzschaltung ist mit dem Zeiger verbunden. Bewegungen der elektrischen Resonanzschaltung innerhalb des elektromagnetischen Feldes, welches von der Sendeantenne erzeugt wird, beeinflusst das elektrische Signal, welches in der Empfangsantenne induziert wird. Das induzierte Signal in der Empfangsantenne ist dabei kennzeichnend für die Bewegung des Zeigers.

Aus der Druckschrift US 4 680 704 A ist eine optische Sensorvorrichtung und ein Verfahren zur Fernüberwachung eines Verbrauchszählers und zum Übertragen des Auslesens von diesem zu einem zentralen Ort bekannt.

Aufgabe der vorliegenden Erfindung ist es somit, einen elektronischen Winkelsensor zu schaffen, der bei beliebigen analogen Zeigerinstrumenten einsatzfähig ist.

Erfindungsgemäß wird dies für den elektronischen Winkelsensor der eingangs genannten Art dadurch erreicht, dass der Winkelsensor an der Vorderseite des Zeigerinstruments anbringbar ausgestaltet ist und die Sensoreinheit ausgestaltet ist, den Zeiger als Gebermittel zu nutzen.

Da der Zeiger als Gebermittel dient, erfolgt die berührungslose Erfassung der Winkelstellung des Zeigers unmittelbar. Dies hat den Vorteil, dass entgegen den Lösungen des oben genannten Standes der Technik kein zusätzliches Gebermittel notwendig ist, welches die Messung beeinflussen kann.

So ist es zum Beispiel denkbar, dass auch sehr leichtgängige Zeigerinstrumente mit kleinen, den Zeiger auslenkenden Kräften, wie zum Beispiel ein auf einem Rosshaar basierenden Hygrometer, mit einem erfindungsgemäßen Winkelsensor ausgestattet werden können, ohne die ursprüngliche Messapparatur des Zeigerinstrumentes in irgendeiner Weise zu verändern und zu beeinflussen.

Im Folgenden werden weitere, jeweils für sich vorteilhafte und beliebig miteinander kombinierbare Ausgestaltungen erläutert.

Der erfindungsgemäße elektronische Winkelsensor kann einen beliebigen Zeiger zu höchstens etwa 75 % verdecken, bevorzugt kann der elektronische Winkelsensor den Zeiger zu höchstens etwa 50 % verdecken, besonders bevorzugt kann der elektronische Winkelsensor den Zeiger zu höchstens etwa 25 % verdecken.

Eine Verdeckung des Zeigers, die bevorzugt geringer als etwa 25 % ist, verschlechtert die Sichtbarkeit der Anzeige des Instrumentes nicht.

Der Winkelsensor kann bevorzugt zentriert über der Achse des Zeigers angebracht sein. Da sich die Messskala von Zeigerinstrumenten zumeist an der Spitze des Zeigers in umfänglicher Richtung erstreckt, wird durch eine derartige zentrale Anordnung des Winkelsensors die Sichtbarkeit beziehungsweise Ablesbarkeit des Zeigerinstrumentes nicht beeinflusst.

Erfindungsgemäss weist die Sensoreinheit des elektronischen Winkelsensors Messsektoren auf, die ausgestaltet sind, ein elektrisches und/oder magnetisches Abbild des Zeigers zu messen.

Die Messsektoren sind entlang eines Messumfangs angeordnet. Die Anzahl der Messsektoren bestimmt die erreichbare Auflösung des Winkelsensors.

So ist es zum Beispiel denkbar, dass für eine binäre Anzeige, d. h. die Messgröße befindet sich entweder über oder unter einem festgelegten Wert, lediglich zwei Messsektoren vorgesehen sein können.

Für eine präzisere Bestimmung der Winkelstellung des Zeigers kann eine Mehrzahl von Messsektoren vorgesehen sein, wobei die in umfänglicher Richtung gemessene Ausdehnung der Messsektoren in der Größenordnung der Zeigerausdehnung entlang dieses Messumfanges, oder aber kleiner als die Zeigerausdehnung entlang dieses Messumfanges sein kann.

Die Messsektoren können in einem kreissektor- oder kreisförmigen Array um die Lagerachse des Zeigers angeordnet sein. Die Anordnung der Messsektoren kann den kompletten Vollkreis, d. h. den Winkel von 360° überdecken.

Der Zeiger von mechanischen Zeigerinstrumenten kann an einem Ende die Zeigerspitze und am gegenüberliegenden Ende ein Ausbalancierende aufweisen. Für einen derart ausgestalteten Zeiger hat eine den Vollkreis überdeckende Anordnung der Messsektoren den Vorteil, dass die vom Ausbalancierende des Zeigers überdeckten Messsektoren ebenso in die Auswertung der Winkelstellung einbezogen werden können.

Zwischen der Zeigerspitze und dem Ausbalancierende des Zeigers kann die Auflagerstelle des Zeigers kreisförmig um die Zeigerachse ausgestaltet sein und einen äußeren Auflagerradius aufweisen. Die Messsektoren sind bevorzugt auf einem Messradius ausgestaltet, welcher von der Zeigerachse aus betrachtet außerhalb des äußeren Auflagerradius liegt.

Als elektrisches und/oder magnetisches Abbild des Zeigers, bzw. als Zeigerabbild ist die Gesamtheit der zum selben Zeitpunkt erfassten, elektrischen und/oder magnetischen Messwerte der einzelnen Messsektoren zu verstehen. Eine unterschiedliche Zeigergeometrie äußert sich darin, dass unterschiedliche Messsektoren vom Zeiger überdeckt werden und zudem der Überdeckungsgrad eines Messsektors mit dem Zeiger entsprechend der Zeigergeometrie variieren kann.

Sind eine Anzahl von N Messsektoren vorgesehen, so erfasst das Zeigerabbild mindestens die N diskreten Messwerte der N Messsektoren.

Im elektronischen Winkelsensor kann ein Normierungsmodul vorgesehen sein, welches ausgestaltet ist, das Zeigerabbild zu normieren, so dass die absoluten Werte der Messsektoren für die Messung unerheblich sind.

Das Zeigerabbild ist in den Werten der einzelnen Messsektoren kodiert und lediglich zwei im Bereich der Messsektoren identische Zeiger weisen ein identisches Zeigerabbild auf.

Es ist zum Beispiel denkbar, dass eine Zeigerspitze dünn ausgestaltet sein kann, das gegenüberliegende Ausbalancierende jedoch eine deutlich größere Breite als die Spitze des Zeigers aufweist und somit mehr Messsektoren überdeckt als die Zeigerspitze.

Ein derartig ausgestaltetes Ausbalancierende kann sich im Zeigerabbild darin äußern, dass mehr Messsektoren im Bereich des Ausbalacierendes einen Messwert erfassen, der eine Überdeckung mit dem Zeiger anzeigen als im Bereich der Zeigerspitze.

Findet lediglich eine Gewichtung der einzelnen Messwerte der Messsektoren statt, so wird das Messsignal bezogen auf die Winkelposition der Zeigerspitze fälschlicherweise um 180° verschoben erfasst.

In der vorliegenden Erfindung ist jedoch die Sensoreinheit ausgestaltet, ein Zeigerabbild und speziell dessen relative Lage zu einem Nullpunkt zu detektieren. Somit kann die Messung der Winkelstellung beliebig ausgeformter Zeiger erfolgen.

Der elektronische Winkelsensor kann ausgestaltet sein, ein Zeigerabbild von Werk vorzusehen oder aber dieses bei der ersten Benutzung des Winkelsensors einzustellen.

Neben der Möglichkeit, verschiedenste Zeigerformen zur Messung der Winkelstellung des Zeigers heranzuziehen, kann ebenso ein defekt ausgestalteter oder in verschiedenem Abstand zum Winkelsensor angebrachter Zeiger zur Messung herangezogen werden.

So können zum Beispiel Zeiger aus unterschiedlichem Material, die folglich auch unterschiedlich große absolute Messwerte liefern, mit dem elektronischen Winkelsensor in ihrer Winkelstellung vermessen werden.

Die Messung des erfindungsgemäßen elektronischen Winkelsensors kann kapazitiv erfolgen. Der abgetastete Zeiger kann bei einer kapazitiven Messung ein dielektrisches Material sein. Somit können alle nicht metallischen Zeiger mit dieser Ausgestaltung des elektronischen Winkelsensors versehen und in ihrer Winkelposition vermessen werden.

Wie oben bereits beschrieben ist der Abstand des dielektrischen Zeigers zur Sensoreinheit in gewissen Grenzen nicht relevant. Es ist lediglich vorteilhaft, wenn der Abstand zwischen dem Zeiger und der Sensoreinheit derart gewählt wird, dass die Änderung der Kapazität einzelner Messsektoren aufgrund der Überdeckung mit dem Zeiger noch messbar ist.

In einer weiteren vorteilhaften Ausgestaltung des elektronischen Winkelsensors sind die kapazitiven Messsektoren radial zur Lagerachse des Zeigers ausgerichtet.

Die Ausrichtung der Messsektoren radial zur Lagerachse hat den Vorteil, dass aufgrund der umfänglichen Anordnung geringere Abstände der kapazitiven Messsektoren zueinander und eine höhere Winkelauflösung erreicht werden können.

Die Messung des elektronischen Winkelsensors kann induktiv erfolgen. Bei dieser Ausgestaltung kann der Zeiger aus einem beliebigen wirbelstromfähigen Material bestehen. Dies kann zum Beispiel ein beliebiges Metall, wie Buntmetall oder Aluminium sein. Die induktive Messung des Zeigers kann vorteilhaft sein, wenn die Beschaffenheit des Zeigers eine kapazitive Messung nicht zulässt.

Unterschiedliche Metalle der Zeiger führen zwar zu unterschiedlichen Absolutwerten der Messsektoren, dies ist jedoch wie oben beschrieben nicht relevant, da der elektronische Winkelsensor ausgestaltet ist, dass Zeigerabbild zur Bestimmung der Winkellage des Zeigers heranzuziehen.

In einer weiteren vorteilhaften Ausgestaltung des elektronischen Winkelsensors sind direkt benachbarte Messsektoren radial versetzt zueinander und/oder in Umfangsrichtung überlappend angeordnet.

Die Sensoreinheit kann somit verschiedene Messringe aufweisen, deren einzelne Messsektoren zu einem benachbarten, auf einem anderen Messring befindlichen Messsektor radial versetzt angeordnet sind.

Somit ist es möglich, dass zwischen den Messsektoren eines ersten Messringes und den Messsektoren eines zweiten Messringes ein um 90° phasenverschobenes Signal gemessen werden kann. Da beide Messringe in ihrer Kombination ausgewertet werden können, ist es möglich, die erreichbare Winkelauflösung zu erhöhen.

Eine Anordnung der Messsektoren in verschiedenen Messringen ist vorteilhaft, da eine Spule, die einen einzelnen Messsektor darstellt, nicht beliebig klein ausgestaltet werden kann und somit die Winkelauflösung begrenzt.

Ferner kann der elektronische Winkelsensor eine Auswerteeinheit umfassen, die ausgestaltet ist, das Zeigerabbild aufzunehmen und auszuwerten. Eine solche Auswerteeinheit kann zum Beispiel eine integrierte Schaltung oder ein Mikrocontroller sein.

Die Auswerteeinheit kann sich direkt im Winkelsensor befinden, oder außerhalb des Zeigerinstrumentes angebracht sein.

Die Auswerteeinheit kann ein Komparatormodul aufweisen, das ausgestaltet ist, ein aktuell gemessenes Zeigerabbild mit einem gespeicherten Zeigerabbild zu vergleichen, welches einer Null-Stellung entspricht.

Ein Rechenmodul der Auswerteeinheit kann ausgestaltet sein, den überstrichenen Winkel des aktuell gemessenen Zeigerabbildes und den sich aus diesem Winkel ergebenden Messwert, zum Beispiel eine Temperatur, zu berechnen.

Ein Ausgabemodul kann ausgestaltet sein, die berechnete Größe über eine Ausgabeschnittstelle in Form eines die Messgröße repräsentierenden Datensignals auszugeben.

Die Ausgabeschnittstelle kann in einer einfachen Ausgestaltung aus Datenleitungen bestehen, welche aus dem Winkelsensor heraus in einen Bereich außerhalb des Zeigerinstrumentes geführt werden können.

Ist der elektronische Winkelsensor in einer Öffnung des Deckglases des Zeigerinstrumentes aufgenommen, so ist es vorteilhaft, wenn besagte Datenleitungen unter einem auf dem Deckglas aufgebrachten Schwarzdruck aus dem Zeigerinstrument herausgeführt werden. Es kann eine mit einem Anschluss versehenen Steckerbuchse vorgesehen sein, in welche die Datenleitungen münden und von welcher mittels eines geeigneten Anschlusskabels der Messwert oder das Schaltpunktsignal abgegriffen werden kann.

Die Auswerteeinheit kann ein Normierungsmodul aufweisen, welches ausgestaltet ist, ein gemessenes Zeigerabbild zu normieren.

Es ist vorteilhaft, wenn die Auswerteeinheit ein Rechenmodul umfasst, welches vorgesehen ist, die Winkellage des gemessenen Zeigerbildes in Bezug auf das Zeigerbild der Nullstellung zu berechnen.

In einer weiteren Ausgestaltung des elektronischen Winkelsensors ist es vorteilhaft, wenn der Zeiger in jeder Winkelstellung mindestens zwei Messsektoren zumindest partiell abdeckt.

Die Auswerteeinheit kann ausgestaltet sein, die Messwerte zweier benachbarter zumindest partiell vom Zeiger abgedeckte Messsektoren mittels eines Komparatormoduls und/oder eines Interpolationsmoduls zu vergleichen und/oder zu interpolieren. Somit kann der elektronische Winkelsensor eine Winkelauflösung bereitstellen, die es erlaubt, eine Zeigerstellung zwischen Messsektoren zu erfassen.

In einer weiteren vorteilhaften Ausgestaltung des elektronischen Winkelsensors ist innerhalb eines vorbestimmten Anzeigebereiches des Zeigerinstrumentes an einer beliebigen Winkelstellung des Zeigers ein Schaltpunkt einstellbar, dessen Erreichen durch den Zeiger die Ausgabe eines Schaltpunktsignals über die Ausgabeschnittstelle auslöst.

Die Auswerteeinheit kann ausgestaltet sein, beim Erreichen eines Maximalwertes oder beim Erreichen eines Minimalwertes ein Schaltpunktsignal auszugeben. Ferner kann ein Speichermodul vorgesehen sein, in welchem der Schaltpunkt gespeichert werden kann.

Der Schaltpunkt kann in der Auswerteeinheit insbesondere in Form des Zeigerabbildes gespeichert sein, welches dem Schaltpunkt entspricht. Besagtes Zeigerabbild des Schaltpunktes kann entweder von Werk eingestellt sein oder aber vom Benutzer bei Inbetriebnahme des elektronischen Winkelsensors eingestellt und im Betrieb beliebig variiert werden.

Die Auswerteeinheit kann ausgestaltet sein, ein der Winkelposition des Zeigers entsprechendes Zeigerabbild mit dem gespeicherten Zeigerabbild des Schaltpunktes repetitiv zu vergleichen.

Die Auswerteeinheit kann ein Korrelationsmodul und/oder ein Komparatormodul aufweisen, mittels derer ein gemessenes Zeigerabbild mit dem gespeicherten Zeigerabbild korreliert und verglichen werden kann, wobei die Auswerteeinheit bei Übereinstimmung des aktuell gemessenen Zeigerabbildes mit dem gespeicherten Zeigerabbild des Schaltpunktes ein Triggersignal generieren kann, dass die Ausgabe des Schaltpunktsignals über die Ausgabeschnittstelle auslöst.

In einer weiteren Ausgestaltung des elektronischen Winkelsensors ist es vorteilhaft, wenn mindestens ein Anzeigeelement zur Anzeige und/oder Einstellung des Schaltpunktes vorgesehen ist und das Anzeigeelement drehbar ausgestaltet ist.

Da das Zeigerinstrument weiterhin zur visuellen Anzeige der Messgröße genutzt wird, ist es vorteilhaft, wenn auch ein Schaltpunkt angezeigt werden kann.

Diese Anzeige kann zum Beispiel durch besagtes Anzeigeelement erfolgen, welches an der dem Anwender zugewandten Seite des Außengehäuses des Winkelsensors ausgestaltet sein kann.

Das Anzeigeelement kann aus zwei getrennt voneinander bewegbare Elemente bestehen, wobei beispielsweise das erste bewegbare Elemente oberhalb einer Sensoreinheit und ein zweites bewegbare Element unterhalb einer Sensoreinheit angebracht ist. Ebenfalls ist es denkbar beide bewegbaren Elemente auf einer Seite der Sensoreinheit anzuordnen. Die Sensoreinheit kann die Lage der beiden Elemente erfassen, indem sowohl die Oberseite als auch die Unterseite der Sensoreinheit Messsektoren aufweist. Zur Schaltpunkteinstellung werden die bewegbaren Elemente an den jeweiligen Schaltpunkt verschoben, wobei sich die Sensoreinheit nicht mitbewegt. Sobald der Zeiger mit einem der beiden bewegbaren Elementen übereinstimmt erfolgt eine Signalisierung des Schaltpunkts.

Des Weiteren kann das Anzeigeelement eine Hervorhebung mit einem Indikatorelement sein, welche sich durch Drehen leicht auf einen gewünschten Schaltpunkt stellen lässt.

Das Indikatorelement kann ebenso unmittelbar am Außengehäuse des Winkelsensors ausgestaltet sein.

In einer weiteren vorteilhaften Ausgestaltung des elektronischen Winkelsensors ist die Sensoreinheit mit dem Anzeigeelement drehfest verbunden.

Durch die drehfeste Verbindung zwischen der Sensoreinheit und dem Anzeigeelement ist die relative Lage zwischen den einzelnen Messsektoren und dem Anzeigeelement fest, d. h. unveränderlich. Die relative Winkellage zwischen dem Anzeigeelement und den stationären Elementen des Zeigerinstrumentes dagegen ist veränderlich.

Diese Ausgestaltung des elektronischen Winkelsensors ist insbesondere vorteilhaft, wenn der aktuell vom Zeigerinstrument gemessene Absolutwert der Messgröße und speziell die Ausgabe desselben über die Ausgabeschnittstelle nicht im Vordergrund stehen, sondern das Hauptanliegen des derart ausgestalteten elektronischen Winkelsensors ist, das Erreichen eines Schaltpunktes zu detektieren und zu signalisieren.

In einer weiteren vorteilhaften Ausgestaltung des elektronischen Winkelsensors weist der Winkelsensor ein von Hand betätigbar ausgestaltetes Betätigungselement und einen Speicher auf, wobei bei Betätigung des Betätigungselementes der Speicher das zum Zeitpunkt der Betätigung gemessene elektrische und/oder magnetische Abbild des Zeigers im Speicher speichert.

Das Betätigungselement kann als mechanischer Taster oder aber auch als kapazitiv arbeitendes Sensorfeld ausgestaltet sein.

Der Speicher kann bevorzugt ein nicht flüchtiger Speicher sein, in welchem das Abbild des Zeigers gespeichert wird. Ferner kann ein Betätigungselement vorgesehen sein, das es ermöglicht bei Betätigung des Betätigungselementes einen 1. Schaltpunkt zu speichern und bei nochmaliger Betätigung des Betätigungselementes einen 2. Schaltpunkt zu speichern.

Es ist möglich, dass die Speicherung des ersten Schaltpunktes mittels eines einfachen Betätigens erfolgt, die Speicherung des zweiten Schaltpunktes dagegen mittels eines kodierten Betätigungsmusters erfolgen kann. Dieses Muster kann zum Beispiel ein kurz aufeinanderfolgendes zweimaliges Betätigen des Betätigungselementes sein.

Zudem kann der Speicher weitere flüchtige und/oder nicht flüchtige Speichersektionen aufweisen, in denen zum Beispiel Zwischenwerte für Berechnungen gespeichert werden können.

Werden das von Hand betätigbare Betätigungselement und der Speicher in Kombination mit einem zu den stationären Teilen des Zeigerinstrumentes unbeweglichen Messsensor verwendet, so kann mittels des Betätigungselementes mindestens ein einen Referenzwert widerspiegelndes Zeigerabbild erfasst und im Speicher gespeichert werden.

Die Auswerteeinheit kann ausgestaltet sein, eine eindeutige Zuordnung eines Wertes der Messgröße zu einer Winkelstellung des Zeigers zu erlauben. Diese Zuordnung kann in Form einer Funktion im Speicher der Auswerteeinheit gespeichert sein.

Das Rechenmodul der Auswerteeinheit kann Interpolationsmodule umfassen, welche ausgestaltet sind, die gemessenen Zeigerabbilder zu interpolieren. Durch eine Interpolation eines Zeigerbildes kann eine Winkelauflösung erreicht werden, welche durch ein reines punktuelles auslesen der Messsektoren nicht erreicht werden kann.

Das Interpolationsmodul kann somit Winkelstellungen, die sich zwischen den Messsektoren befinden, durch Interpolation der N Messwerte der Messsektoren bereitstellen

Wird das Betätigungselement in Kombination mit einer relativ zu den stationären Bauteilen des Zeigerinstrumentes drehbaren Sensoreinheit verwendet, so kann der Winkelsensor durch Betätigung des Betätigungselementes auf einfache Weise einen Schaltpunkt erfassen und speichern.

Hierzu wird das für den Benutzer sichtbare Anzeigeelement, insbesondere das Indikatorelement mit dem Zeiger des Zeigerinstrumentes in Übereinstimmung gebracht.

Da die Sensoreinheit drehfest mit dem Anzeigeelement verbunden ist, folgt auch diese der Drehung. Wird in dieser Winkelstellung das Betätigungselement betätigt, so kann die Auswerteeinheit das Zeigerabbild erfassen, interpolieren, und im Speicher speichern.

In einer weiteren Ausgestaltung des elektronischen Winkelsensors ist das Auswerteelement vorteilhafter Weise ausgestaltet, das gespeicherte elektrische und/oder magnetische Abbild des Zeigers mit einem aktuell gemessenen elektrischen und/oder magnetischen Abbild des Zeigers zu vergleichen und bei Übereinstimmung eines gespeicherten mit dem aktuellen elektrischen und/oder magnetischen Abbild des Zeigers ein Erreichen des mindestens einen gespeicherten Schaltpunktes zu signalisieren.

Die Auswerteeinheit kann ausgestaltet sein, im Folgenden das jeweilig aktuelle Zeigerabbild repetitiv zu erfassen, und mittels des Komparatormoduls das aktuelle Zeigerabbild mit dem gespeicherten Abbild des Schaltpunktes zu vergleichen. Da die Sensoreinheit mit dem Anzeigeelement mit gedreht wurde, ergibt sich ein mit dem gespeicherten Zeigerabbild identisches aktuelles Zeigerabbild erst dann, wenn der Zeiger des Zeigerinstrumentes einen vom Anzeigeelement angezeigten Wert erreicht.

Befindet sich der Zeiger des Zeigerinstrumentes, zum Beispiel beim Erreichen der Maximaltemperatur, in Überdeckung mit dem Anzeigeelement, so erfasst die Auswerteeinheit ein aktuelles Zeigerabbild und das Komparatormodul detektiert, dass das gemessenen Zeigerabbild identisch mit dem zuvor gespeicherten Zeigerabbild ist. Die Auswerteeinheit wertet die gemeldete Übereinstimmung aus und kann die Ausgabe eines Schaltpunktsignals über die Ausgabeschnittstelle initiieren.

Zur Detektion, ob ein Schaltpunkt erreicht ist, wird somit kein einzelner Wert, zum Beispiel ein Maximalwert, herangezogen, sondern ein Zeigerabbild. Dies hat den Vorteil, dass die Einstellung eines Schaltpunktes für Zeiger jedweder Form möglich ist.

Durch die Speicherung mehrerer Schaltpunkte ist es möglich, den Betrieb eines Gerätes innerhalb eines Bereiches der Messgröße zu überwachen. So kann zum Beispiel ein Temperaturbereich festgelegt werden, innerhalb dessen eine Vorrichtung betrieben werden soll.

Beim Unterschreiten eines Minimalwertes oder Überschreiten eines Maximalwertes kann nach erfolgter Speicherung der beiden Schaltpunkte durch ein Ausgabemodul ein Schaltpunktsignal über die Ausgabeschnittstelle ausgegeben werden.

Die Auswerteeinheit kann ausgestaltet sein, ein Schaltpunktsignal auszugeben, welches für beide Schaltpunkte identisch ist. Ebenso ist es möglich, dass die Auswerteeinheit ein Schaltpunktsignal ausgibt, welches zur Unterscheidung der Schaltpunkte für besagte Schaltpunkte unterschiedlich ist. Dies ist zum Beispiel sinnvoll, wenn eine Überschreitung des Maximalwertes einer Messgröße kritischer als die Unterschreitung eines Minimalwertes besagter Messgröße ist.

Die Auswerteeinheit kann beim Erreichen des mindestens einen gespeicherten Schaltpunktes die Ausgabe eines Schaltpunktsignals oder Alarmsignals über die Ausgabeschnittstelle auslösen.

Als Ausgabeschnittstelle kann ein Alarmausgang vorgesehen sein, welcher zum Beispiel mit einem GSM-Modul gekoppelt sein kann. Es ist in dieser Ausgestaltung möglich, dass ein das Erreichen eines Schaltpunktes signalisierendes Alarmsignal über das GSM-Netz mit sehr geringer zeitlicher Verzögerung übertragen werden kann.

In einer weiteren vorteilhaften Ausgestaltung des elektronischen Winkelsensors ist dieser an einem Deckglas für ein Zeigerinstrument angebracht.

Der Winkelsensor kann durch eine Öffnung im Deckglas hindurchreichen und somit mit dem Deckglas verbunden sein. Ebenso ist es möglich, dass der Winkelsensor unter bzw. über dem Deckglas angebracht ist.

Das mit dem Winkelsensor verbundene Deckglas kann das ursprüngliche Deckglas des Zeigerinstrumentes ersetzen, so dass nur das ursprüngliche Deckglas des Zeigerinstrumentes ersetzt werden kann, ohne weitere Modifikationen bzw. Manipulationen des Zeigers oder des Zeigerinstrumentes zu erfordern.

Die ursprüngliche Ablesbarkeit der Anzeige bleibt weiterhin gewährleistet.

Der elektronische Winkelsensor kann somit eine Vielzahl mechanischer Zeigerinstrumente mit der Funktionalität der elektrischen Ausgabe des Messwertes und/oder der Überwachung eines Schaltpunktes bzw. mehrerer Schaltpunkte erweitern.

Ferner kann das Deckglas des elektronischen Winkelsensors mit Solarzellen ausgestaltet sein. Diese erlauben einen autarken Betrieb des elektronischen Winkelsensors fernab stationärer Energieversorgungsnetze.

Des Weiteren kann das Deckglas Bereiche aufweisen, die mit einer Touch-Funktion ausgestattet sind. So kann das Betätigungselement zum Beispiel nicht mechanisch, sondern elektrisch mittels kapazitiver Abtastung betätigbar sein.

Die Touch-Funktion ist vorteilhaft derart ausgestaltet, dass der Touch-Sensor transparent ist und somit die Sichtbarkeit des Zeigerinstrumentes nicht beeinflusst.

In einer vorteilhaften Ausgestaltung eines Verfahrens zur berührungslosen Erfassung einer Winkelstellung des Zeigers eines Zeigerinstrumentes wird die Winkelstellung des Zeigers von der Vorderseite des Zeigerinstrumentes erfasst und der Zeiger selbst als Gebermittel verwendet.

Bei besagtem Verfahren wird die Winkelstellung als elektrische und/oder magnetische Messgröße erfasst. Die Erfassung des Gebermittels erfolgt derart, dass ein Abbild des Zeigers erfasst wird.

Beim erwähnten Verfahren wird vorteilhafterweise vor dem Messen ein Zeigerabbild des Zeigers in einer Referenzstellung erfasst und gespeichert. Ferner kann während des Verfahrens eine temporäre Speicherung eines oder mehrerer Zeigerabbilder vorgesehen sein, sodass besagte gespeicherte Zeigerabbilder zur Interpolation und/oder Normierung und/oder Korrelation herangezogen werden können.

Im beschriebenen Verfahren kann die Korrelation eines gespeicherten Zeigerabbildes mit einem aktuell gemessenen Zeigerabbild erfolgen und es kann ausgewertet werden, ob ein Schaltpunkt erreicht worden ist. Ebenso kann im Verfahren die Ausgabe eines Schaltpunktsignals beim Erreichen eines Schaltpunktes initiiert werden.

Zum Einstellen eines Schaltpunktes kann im Verfahren das Anzeigeelement auf den Zeiger gedreht werden, das Betätigungselement von Hand betätigt werden, das Zeigerabbild erfasst, temporär gespeichert, interpoliert und nicht-flüchtig gespeichert werden.

Im weiteren Verlauf des Einstellens des Schaltpunktes kann das Anzeigeelement auf den gewünschten Schaltpunkt gedreht werden, das aktuelle Zeigerabbild repetitiv erfasst und mit dem gespeicherten Zeigerabbild korreliert werden.

In den weiteren Schritten des Verfahrens kann ausgewertet werden, ob das gespeicherte Zeigerabbild dem gemessenen Zeigerabbild entspricht und ein Schaltpunktsignal ausgegeben werden, sofern das gespeicherte Zeigerabbild dem gemessenen Zeigerabbild entspricht.

Im Folgenden wird die Erfindung anhand beispielhafter Ausgestaltungen mit Bezug auf die Zeichnungen erklärt. Nach den obigen Ausführungen können einzelne Merkmale des beschriebenen Ausführungsbeispiels weggelassen werden, wenn es auf den mit diesen Merkmalen verbundenen Vorteil bei einer bestimmten Anwendung nicht ankommen. Elemente, die sich hinsichtlich Funktion und/oder Aufbau entsprechen, werden jeweils mit demselben Bezugszeichen versehen.

Es zeigen:
- Fig. 1:: eine perspektivische Ansicht eines mechanischen Zeigerinstrumentes des Standes der Technik;
- Fig. 2:: eine perspektivische Ansicht eines Zeigerinstrumentes mit einem elektronischen Winkelsensor;
- Fig. 3:: einen Schnitt der perspektivischen Ansicht eines Zeigerinstrumentes mit elektronischem Winkelsensor;
- Fig. 4:: eine perspektivische Ansicht eines kapazitiven elektronischen Winkelsensors;
- Fig. 5:: eine perspektivische Ansicht eines induktiven elektronischen Winkelsensors;
- Fig. 6:: das Konzept eines Zeigerabbildes und die Einstellung eines Schaltpunktes.
- Fig. 6a:: ein erstes Zeigerabbild.
- Fig. 6b:: ein zweites Zeigerabbild.

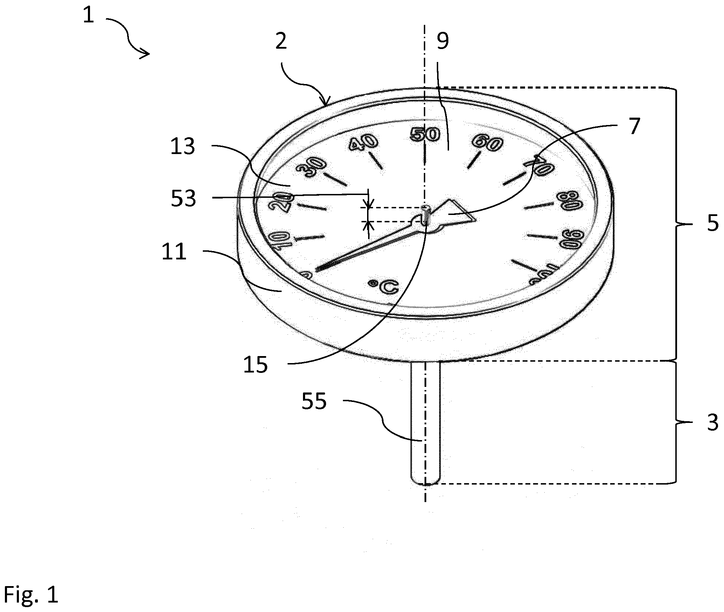

In Fig. 1 ist ein Zeigerinstrument 1 des Standes der Technik gezeigt. Ein solches Zeigerinstrument 1 umfasst eine Messanordnung 3 und eine Anzeigeanordnung 5, welche wiederum einen Zeiger 7, ein Zifferblatt 9, ein Anzeigegehäuse 11 sowie ein Deckglas 13 umfasst.

Die Messanordnung wandelt eine Messgröße in einen proportionalen Drehwinkel der Zeigerachse 15, wobei besagter Drehwinkel proportional zur Messgröße ist.

Der Zeiger 7 ist drehfest mit einer Zeigerachse 15 verbunden.

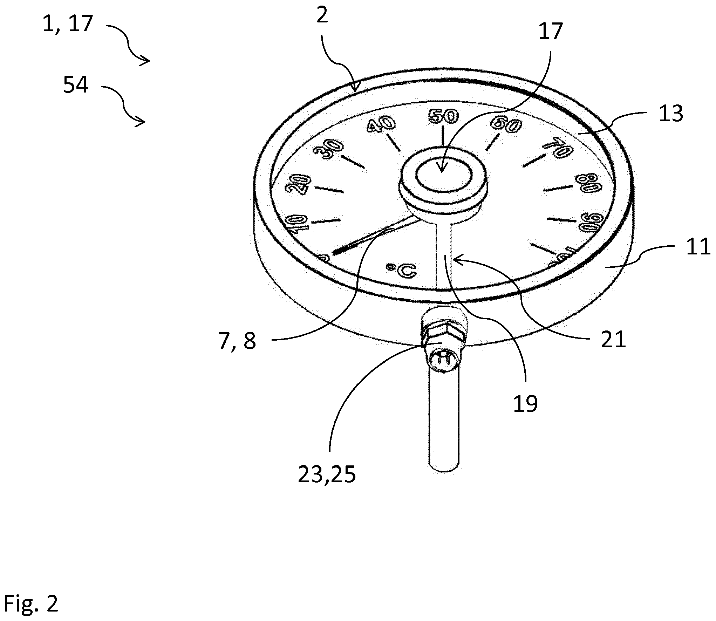

In Fig. 2 ist ein Zeigerinstrument mit einem elektronischen Winkelsensor 17 gezeigt.

Neben den in Fig. 1 gezeigten technischen Merkmalen umfasst die in Fig. 2 gezeigte Ausführungsform des Zeigerinstrumentes zusätzlich einen Schwarzdruck 19, welcher direkt auf die Oberseite des Deckglases 13 aufgedruckt ist. Unter besagtem Schwarzdruck 19 sind Datenleitungen (21, nicht sichtbar) vom elektronischen Winkelsensor zum Anzeigegehäuse 11 unter dem Deckglas 13 geführt, wobei die nicht sichtbaren Datenleitungen in einen Aggregatanschluss 23 münden, der die Ausgabeschnittstelle 25 darstellt.

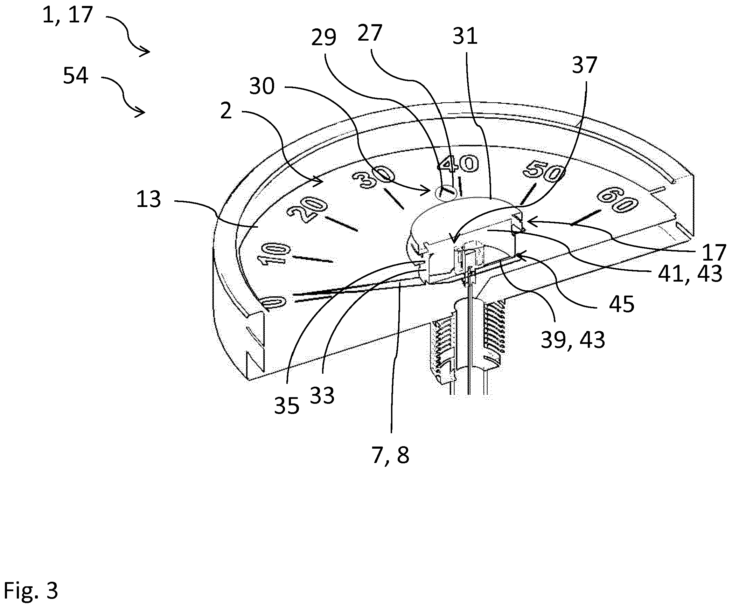

In Fig. 3 ist das Zeigerinstrument 1 mit einem elektronischen Winkelsensor 17 in geschnittener, perspektivischer Ansicht gezeigt. Der elektronische Winkelsensor 17 umfasst ein Anzeigeelement 27, welches ein Indikatorelement 29 aufweist.

Das Indikatorelement 29 des Anzeigeelementes 27 zeigt auf einen Schaltpunkt 30.

In der vorliegenden Ausführungsform ist das Indikatorelement 29 als ein in das Anzeigeelement 27 geprägtes Dreieck ausgestaltet, es kann jedoch auch in jedweder anderer Form ausgestaltet sein, zum Beispiel als ein auf dem Betätigungselement 42 ausgestalteter Punkt.

Der elektronische Winkelsensor 17 umfasst ein oberes Gehäuseteil 31 und ein unteres Gehäuseteil 33. Beide Gehäuseteile 31, 33 sind miteinander verbunden, zum Beispiel verrastet, wobei eine Verbindungsstelle 35 durch eine Öffnung des Deckglases 13 hindurchgeführt ist. Die Öffnung des Deckglases 13 ist in Fig. 3 nicht sichtbar.

Auf der dem Benutzer zugewandten Seite des oberen Gehäuseteils 31 ist ein Betätigungselement 42 vorgesehen, das entweder separat und relativ zum oberen Gehäuseteil beweglich, oder als monolithischer Teil des oberen Gehäuseteils 31 ausgestaltet sein kann.

Das Betätigungselement 42 kann ausgestaltet sein, sowohl optisch als auch haptisch zu signalisieren, dass und welche Funktion der Betätigungselement 42 zur Verfügung stellt.

Die beiden Gehäuseteile 31, 33 des elektronischen Winkelsensors 17 bilden einen Innenraum 37 des Winkelsensors 17 aus, in dem sich die Sensoreinheit 39 und die Auswerteeinheit 41 befinden. Sowohl die Sensoreinheit 39 als auch die Auswerteeinheit 41 sind als integrierte Schaltkreise 43 ausgestaltet.

Die Sensoreinheit 39 befindet sich im unteren Gehäuseteil 33 des Winkelsensors 17, wobei das untere Gehäuseteil 33 auf seiner in Richtung des Zeigers 7 weisenden Seite derart geöffnet ist, dass in Richtung des Zeigers 7 weisend die Sensoreinheit 39 den Innenraum 37 des Winkelsensors 17 abschließt. Die Sensoreinheit 39 ist somit von außerhalb des Winkelsensors 17 sichtbar und zugänglich.

Zwischen der in Richtung Zeiger 7 weisenden Sensoreinheit 39 und dem Zeiger 7 des Zeigerinstrumentes 1 besteht ein Messabstand 45.

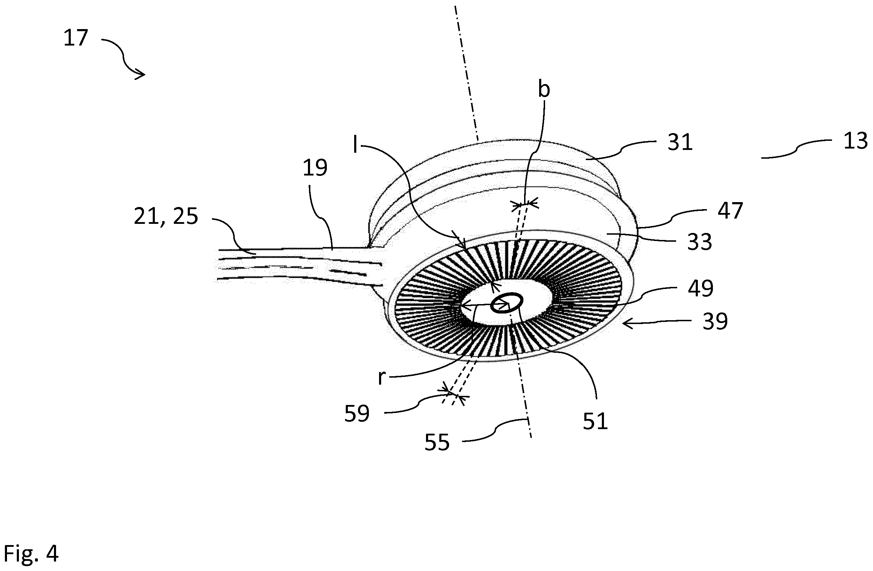

In Fig. 4 ist ein kapazitiver elektronischer Winkelsensor 17 gezeigt. Dieser umfasst das obere Gehäuseteil 31, das untere Gehäuseteil 33, welches in Fig. 4 halb transparent gezeichnet ist, die Ausgabeschnittstelle 25, welche in Form von zwei Datenleitungen 21 ausgestaltet ist, die Sensoreinheit 39 sowie das Deckglas 13, welches den Schwarzdruck 19 aufweist.

An der Verbindungsstelle 35, welche sich in der nicht sichtbaren Öffnung des Deckglases 13 befindet, ist ein Dichtelement 47 zwischen dem oberen Gehäuseteil 31 und dem Deckglas 13 vorgesehen. Das Dichtelement 47 ist vorteilhaft, um ein Eindringen von Staub und Flüssigkeiten hinter das Deckglas 13 zu reduzieren oder gar zu verhindern.

Ferner sind einzelne Messsektoren 49 der Sensoreinheit 39 gezeigt. Diese erstrecken sich umfänglich um eine Achsaufnahme 51. Die Achsaufnahme 51 dient dazu, ein über den Zeiger 7 hinausragendes Ende der Zeigerachse 15 (siehe Fig. 1) aufzunehmen, ohne dass die Zeigerachse 15 den Winkelsensor 17 berührt.

Die Achsaufnahme 51 erlaubt es auch, den Messabstand 45 zwischen Zeiger 7 und Sensoreinheit 39 unabhängig vom Achsüberstand 53 einzustellen.

Die Messsektoren 49 sind in der in Fig. 4 gezeigten Ausgestaltung des elektronischen Winkelsensors 17 als flächige Elektroden 50 ausgestaltet. Die gemessene Kapazität der Elektroden 50 ist abhängig davon, ob sich ein dielektrisches Material in der Nähe der Elektroden 50 befindet und wie groß die Überlappung zwischen dem Zeiger und der Fläche der Elektroden 50 ist.

Mittig durch die Achsaufnahme 51 verläuft im montierten Zustand 53 die Zeigerachse (in Fig. 4 nicht gezeigt), welche hier durch eine Drehachse 55 symbolisiert ist. Die in Fig. 4 gezeigte Drehachse 55 ist im montierten Zustand 53 identisch der in Fig. 1 gezeigten Drehachse 55.

Die Messsektoren 49 weisen eine Länge I und eine Breite b auf. Die Länge I erstreckt sich in radialer Richtung und die Breite b in umfänglicher Richtung. Die erreichbare Winkelauflösung der Sensoreinheit 39 ist davon abhängig, wie viele Messsektoren 49 sich in einem Winkelsegment befinden. Sind die Messsektoren 49 vollumfänglich, d. h. über einen Winkel von 2π angeordnet, so ergibt sich die Winkelauflösung aus dem Quotienten von 2π und der Anzahl N der Messsektoren 49.

Die erreichbare Winkelauflösung der Sensoreinheit 39 ist somit abhängig von der Breite b der Messsektoren 49, dem Abstand 59 zwischen den Messsektoren 49 als auch vom radialen Abstand r der Messsektoren 49 von der Drehachse 55.

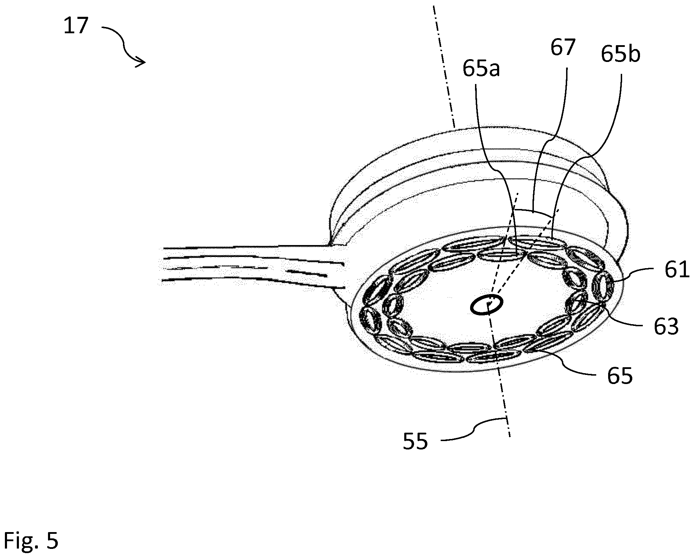

In Fig. 5 ist ein induktiver elektronischer Winkelsensor 17 gezeigt. Dieser umfasst im Wesentlichen die gleichen Elemente wie der kapazitive elektronische Winkelsensor 17 aus Fig. 4.

Die Sensoreinheit 39 des in Fig. 5 gezeigten Ausführungsbeispiels des elektronischen Winkelsensors 17 umfasst einen inneren Spulenring 61 und einen äußeren Spulenring 63.

Beide Spulenringe 61, 63 umfassen eine Mehrzahl von Einzelspulen 65, welche jeweils einen Messsektor 49 des induktiven elektronischen Winkelsensors 17 darstellen.

Die Einzelspulen 65 weisen bevorzugt mindestens eine Windung auf.

Die auf unterschiedlichen Spulenringen 61, 63 vorgesehenen und benachbarten Einzelspulen 65 weisen einen Winkelversatz 67 auf, der am Beispiel der Einzelspulen 65a und 65b in Fig. 5 gezeigt ist. Der Winkelversatz 67 ist so gewählt, dass die Messwerte der Einzelspulen 65a und 65b um 90° phasenverschoben zueinander sind. Diese Anordnung erhöht die Winkelauflösung.

Sowohl die in Fig. 4 als Elektroden 50 oder in Fig. 5 als Einzelspulen 65 ausgestalteten Messsektoren 49 können Teil des integrierten Schaltkreises 43 sein.

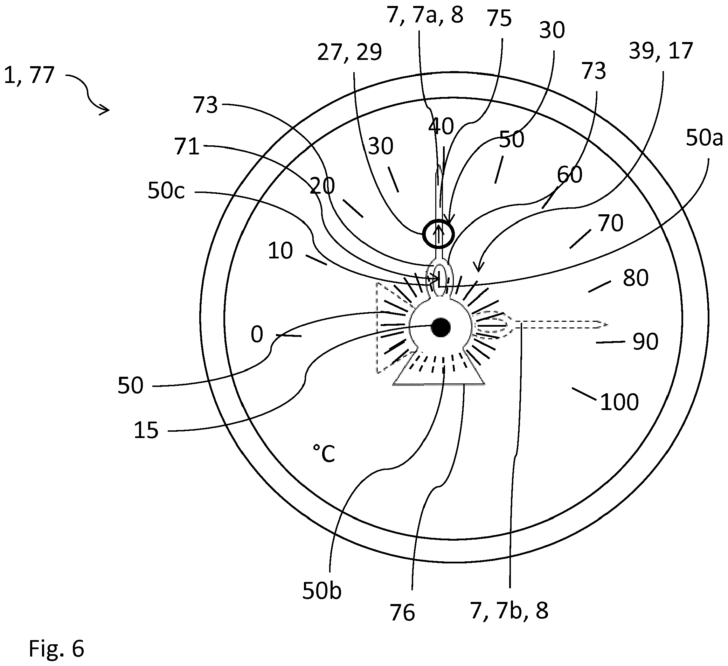

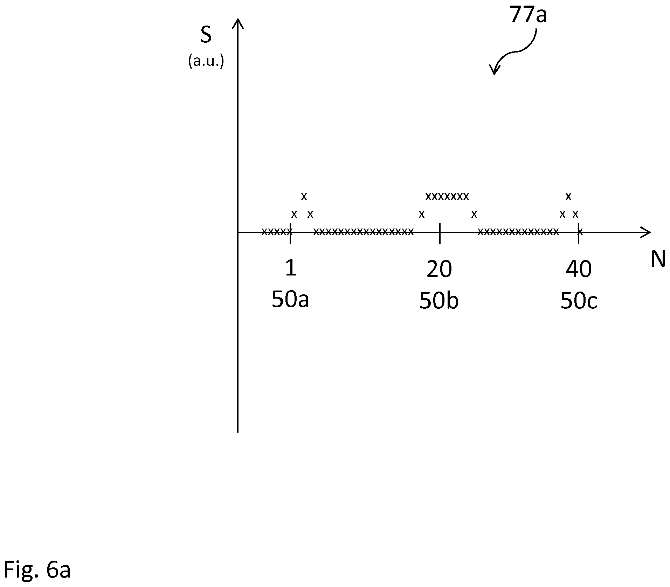

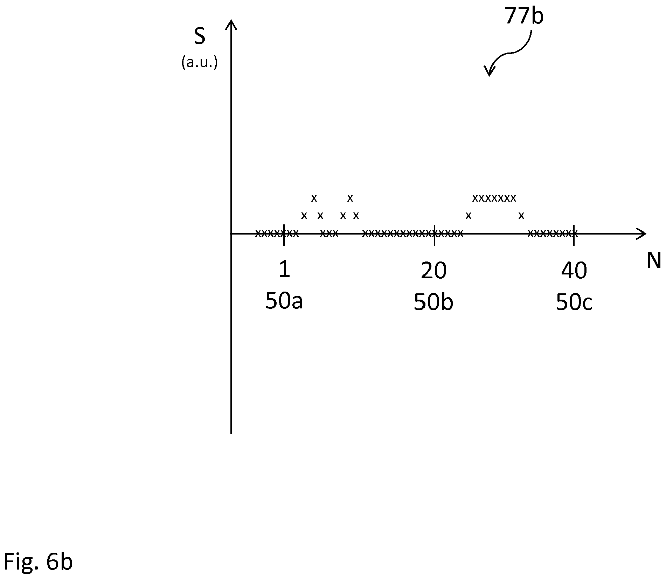

Mit Bezug zu Fig. 6 soll das Einstellen eines Schaltpunktes 30 und das Konzept des Zeigerabbildes 77 anhand einer die Erfindung nicht einschränkenden Ausgestaltung erläutert werden.

Gezeigt ist das Zeigerinstrument 1 mit einem Zeiger 7 in einer ersten Zeigerstellung 7a. Das Zeigerinstrument 1 kann in der in Fig. 6 gezeigten Ausgestaltung zur Temperaturmessung benutzt werden, wobei ein Prozess überwacht wird, dessen Temperatur etwa zwischen 32 °C und 65 °C liegt und die Minimaltemperatur von etwa 32 °C nicht unterschritten werden darf.

In Fig. 6 ist ebenso das Anzeigeelement 27 sowie beispielhaft eine Sensoreinheit 39 mit vierzig Elektroden 50 eines kapazitiven elektronischen Winkelsensors 17 gezeigt. Die Gehäuseteile des Winkelsensors 17 sind nicht gezeigt, um die Lage der einzelnen Elektroden 50 zum Zeiger 7 zu verdeutlichen.

Das Anzeigeelement 27 zeigt mit seinem Indikatorelement 29 den Schaltpunkt 30 an.

Der Zeiger 7 hat in der gezeigten Ausgestaltung einer Aussparung 71 und zwei Stege 73, welche in der Zeigerspitze 75 zusammenlaufen und die Aussparung 71 umschließen.

Am gegenüberliegenden Ende des Zeigers weist dieser ein Ausbalancierende 76 auf, das die Form eines Schwalbenschwanzes hat und somit mehr Elektroden 50 als die einzelnen Stege 73 der Zeigerspitze 75 überdeckt.

In Fig. 6a ist ebenso ein erstes Zeigerabbild 77a gezeigt. Das erste Zeigerabbild 77a setzt sich aus den einzelnen Signalen S der jeweiligen Elektroden 50 in willkürlichen Einheiten (arbritary units - a.u.) zusammen. Diese Signale S sind über einen Laufindex n der Elektroden 50 aufgetragen.

Je nach Ausgestaltung des Zeigers im Bereich der Sensoreinheit ergibt sich folglich ein unterschiedliches Zeigerabbild 77.

Im gezeigten Beispiel wird der Elektrode 50a der Laufindex n=1 zugeordnet, der Elektrode 50b der Laufindex n=20 und der Elektrode 50c der Laufindex n=40. Besagte Zuordnung ist nur beispielhaft gewählt, um das Prinzip des Zeigerabbildes 77 zu verdeutlichen.

In der ersten Zeigerstellung 7a überdeckt der Zeiger 7 die Elektroden 50 derart, dass die gemessene Kapazität der einzelnen Elektroden 50 aufgetragen über den Laufindex n der Elektroden 50 das erste Zeigerabbild 77a ergibt. Die Kapazität ist dabei in willkürlichen Einheiten als Signal S aufgetragen.

Aus dem ersten Zeigerabbild 77a ist deutlich zu erkennen, dass mittels einer Auswertung des Maximalwertes bzw. des gewichteten Maximalwertes nicht auf die Winkellage des Zeigers 7 geschlossen werden kann. Im Falle einer Gewichtung während der Messung würde das mehrere Elektroden 50 überdeckende Ausbalancierende 76 eine fehlerhafte Anzeige von etwa 100 °C suggerieren.

Soll im gezeigten Beispiel der Fig. 6 die Temperatur von ca. 32 °C als Schaltpunkt 30 der Minimaltemperatur festgelegt werden, so wird das Anzeigeelement 27 mit dem Zeiger 7 in Übereinstimmung gebracht.

In einer anderen Ausgestaltung kann es ausreichend sein, dass Indikatorelement 29, welches auf dem oberen Gehäuseteil 31 ausgestaltet sein kann, mit dem Zeiger 7 in Übereinstimmung zu bringen. Das Indikatorelement 29 kann zum Beispiel ein Punkt, oder aber jede andere Form einer Markierung auf dem oberen Gehäuseteil 31 sein.

Diese Übereinstimmung kann in jeder beliebigen Zeigerposition, d.h. nicht zwingend in der gezeigten Zeigerposition 7a, erfolgen, da die Sensoreinheit 39 und somit die Gesamtheit der Elektroden 50 drehfest mit dem Anzeigeelement 27 verbunden sind und somit bei Übereinstimmung von Anzeigeelement 27 mit dem Zeiger 7 die Elektrode 50a stets über der Aussparung 71 des Zeigers 7 liegt.

Durch Betätigen des Betätigungsorgans (nicht gezeigt) kann das erste Zeigerabbild 77a in einen nicht gezeigten Speicher gespeichert werden.

Nach dem Einlesen des ersten Zeigerabbildes 77a wird das Anzeigeelement 27 auf den Schaltpunkt 30 gedreht. In Fig. 6 ist dies die Zeigerstellung, welche einer Temperatur von ca. 38 °C entspricht.

Steigt die Temperatur auf ca. 88 °C an, so befindet sich der Zeiger 7 in einer durch eine gestrichelte Linie angedeuteten zweiten Zeigerstellung 7b. In der zweiten Zeigerstellung 7b überdeckt der Zeiger andere Elektroden 50 der Sensoreinheit 39, da die Lage der Sensoreinheit 39 im Bezug auf das Zeigerinstrument 1 nicht verändert wurde.

In der zweiten Zeigerstellung 7b wird ein zweites Zeigerabbild 77b erfasst.

In Fig. 6b ist ein zweites Zeigerabbild 77b gezeigt. Dieses zweite Zeigerabbild 77b ist, da der Zeiger 7 von der ersten Zeigerstellung 7a zur zweiten Zeigerstellung 7b um 90° gedreht wurde, bezüglich des ersten Zeigerabbildes um zehn Elektroden 50 versetzt. Das zweite Zeigerabbild 77b ist ebenso in Fig. 6 gezeigt.

Fällt im Betrieb die Temperatur auf 38 °C ab, so wird erst genau beim Erreichen der Zeigerstellung, die einer Temperatur von 38 °C entspricht, das erste Zeigerabbild 77a erreicht.

Ist dies der Fall, so wird die nicht gezeigte Auswerteeinheit das Erreichen des Schaltpunktes 30 detektieren und wie oben beschrieben die Ausgabe eines Schaltpunktsignals veranlassen.

## Patentansprüche

1. Elektronischer Winkelsensor (17) für mit einem Zeiger (7) versehene, von einer Vorderseite (2) zu betrachtende Zeigerinstrumente (1), mit einer Sensoreinheit (39) zur berührungslosen Erfassung einer Winkelstellung des Zeigers (7), **dadurch gekennzeichnet, dass** die Sensoreinheit (39) entlang eines Messumfanges angeordnete Messsektoren (49) aufweist, die ausgestaltet sind, ein elektrisches und/oder magnetisches Abbild des Zeigers (7) zu messen und der Winkelsensor (17) an einer Vorderseite (2) des Zeigerinstruments (1) anbringbar ausgestaltet ist und die Sensoreinheit (39) ausgestaltet ist, nur den Zeiger (7) als Gebermittel zu nutzen, wobei die Messung kapazitiv, induktiv oder magnetisch erfolgt.

2. Elektronischer Winkelsensor (17) nach Anspruch 1, **dadurch gekennzeichnet, dass** die Messung kapazitiv erfolgt und die Messsektoren (49) radial zur Lagerachse (15) des Zeigers (7) ausgerichtet sind.

3. Elektronischer Winkelsensor (17) nach einem der vorstehenden Ansprüche, **dadurch gekennzeichnet, dass** direkt benachbarte Messsektoren (49) radial versetzt zueinander und/oder in Umfangsrichtung überlappend angeordnet sind.

4. Elektronischer Winkelsensor (17) nach einem der Ansprüche 1 bis 3, **dadurch gekennzeichnet, dass** zwei benachbarte Messsektoren (49) eingerichtet sind, vom Zeiger (7) in jeder Winkelstellung zumindest partiell abgedeckt zu werden.

5. Elektronischer Winkelsensor (17) nach einem der Ansprüche 1 bis 4, **dadurch gekennzeichnet, dass** innerhalb eines vorbestimmten Bereichs an einer beliebigen Winkelstellung des Zeigers (7) ein Schaltpunkt (30) einstellbar ist, dessen Erreichen durch den Zeiger (7) die Ausgabe eines Schaltpunktsignals über eine Ausgabeschnittstelle (25) auslöst.

6. Elektronischer Winkelsensor (17) nach Anspruch 5, **dadurch gekennzeichnet, dass** mindestens ein Anzeigeelement (27) zur Anzeige und/oder Einstellung des Schaltpunktes (30) vorgesehen ist, und das mindestens eine Anzeigeelement (27) drehbar ausgestaltet ist.

7. Elektronischer Winkelsensor (17) nach Anspruch 6, **dadurch gekennzeichnet, dass** die Sensoreinheit (39) mit dem mindestens einem Anzeigeelement (27) drehfest verbunden ist.

8. Elektronischer Winkelsensor (17) nach einem der Ansprüche 6 oder 7, **dadurch gekennzeichnet, dass** der Winkelsensor (17) ein von Hand betätigbar ausgestaltetes Betätigungselement (42) und einen Speicher aufweist und dass bei Betätigung des Betätigungselementes (42) das zum Zeitpunkt der Betätigung gemessene elektrische und/oder magnetische Abbild (77) des Zeigers (7) in der Auswerteeinheit (41) gespeichert wird.

9. Elektronischer Winkelsensor (17) nach einem der Ansprüche 7 oder 8, **dadurch gekennzeichnet, dass** die Auswerteeinheit (41) ausgestaltet ist, das gespeicherte elektrische und/oder magnetische Abbild (77) des Zeigers (7) mit einem aktuell gemessenen elektrischen und/oder magnetischen Abbild (77) des Zeigers (7) zu vergleichen und bei Übereinstimmung eines gespeicherten mit dem aktuellen elektrischen und/oder magnetischen Abbildes (77) des Zeigers (7) ein Erreichen des mindestens einen gespeicherten Schaltpunkts (30) zu signalisieren.

10. Elektronischer Winkelsensor (17) nach einem der Ansprüche 1 bis 9, **gekennzeichnet durch** ein Deckglas (13) für ein Zeigerinstrument (1), an dem der elektronische Winkelsensor (17) angebracht ist.

11. Verfahren zur berührungslosen Erfassung einer Winkelstellung des Zeigers (7) eines Zeigerinstrumentes (1) mit einer Sensoreinheit (39), **dadurch gekennzeichnet, dass** die Winkelstellung des Zeigers (7) von der Vorderseite (2) des Zeigerinstrumentes (1) als elektrische und/oder magnetische Messgröße erfasst wird und nur der Zeiger (7) selbst als Gebermittel (8) verwendet wird, wobei die Erfassung des Gebermittels (8) derart erfolgt, dass ein Abbild des Zeigers (7) mithilfe entlang eines Messumfangs angeordneten Messsektoren (49) der Sensoreinheit (39) erfasst wird.

12. Verfahren zur berührungslosen Erfassung einer Winkelstellung des Zeigers (7) nach Anspruch 11, **dadurch gekennzeichnet, dass** vor dem Messen ein Abbild des Zeigers (7) in einer Referenzstellung erfasst und gespeichert wird.

13. Verfahren zur berührungslosen Erfassung einer Winkelstellung des Zeigers (7) nach Anspruch 12, **dadurch gekennzeichnet, dass** eine temporäre Speicherung eines oder mehrerer Abbilder des Zeigers (7) vorgesehen ist, sodass die gespeicherten Abbilder des Zeigers (7) zur Interpolation und/oder Normierung und/oder Korrelation herangezogen werden können.

14. Verfahren zur berührungslosen Erfassung einer Winkelstellung des Zeigers (7) nach Anspruch 13, **dadurch gekennzeichnet, dass** die Korrelation eines gespeicherten Abbildes des Zeigers (7) mit einem aktuell gemessenen Abbild des Zeigers (7) erfolgt und ausgewertet wird, ob ein Schaltpunkt erreicht worden ist.

15. Verfahren zur berührungslosen Erfassung einer Winkelstellung des Zeigers (7) nach Anspruch 14, **dadurch gekennzeichnet, dass** eine Ausgabe eines Schaltpunktsignals beim Erreichen des Schaltpunktes initiiert wird.

## Claims

1. Electronic rotary encoder (17) for pointer instruments (1) equipped with a pointer (7), to be viewed from a front side (2), with a sensor unit (39) for the contactless detection of an angle position of the pointer (7), **characterized in that** the sensor unit (39) has measurement sectors (49) positioned along a measuring circumference, which are designed to measure an electric and/or magnetic image of the pointer (7) and the rotary encoder (17) is designed to be attachable to a front side (2) of the pointer instrument (1) and sensor unit (39) is designed to use only the pointer (7) as an encoder means, whereby the measurement is effected capacitively, inductively or magnetically.

2. Electronic rotary encoder (17) in accordance with Claim 1, **characterized in that** the measurement is effected capacitively and the measurement sectors (49) are aligned radially in relation to the bearing axis (15) of the pointer (7).

3. Electronic rotary encoder (17) in accordance with any one of the preceding Claims, **characterized in that** directly neighboring measurement sectors (49) are arranged radially offset in relation to each other and/or overlapping in a circumferential direction.

4. Electronic rotary encoder (17) in accordance with any one of the preceding Claims 1 to 3, **characterized in that** two neighboring measurement sectors (49) are set up to be covered at least partially by the pointer (7) in any angle position.

5. Electronic rotary encoder (17) in accordance with any one of the preceding Claims 1 to 4, **characterized in that** within a predetermined area a switching point (30) can be set at any angle position of the pointer (7), and when the pointer (7) reaches this point, the output of a switching point signal is triggered via an output interface (25).

6. Electronic rotary encoder (17) in accordance with Claim 5, **characterized in that** at least one display element (27) is provided for displaying and/or setting the switching point (30), and that at least one display element (27) is designed to be rotatable.

7. Electronic rotary encoder (17) in accordance with Claim 6, **characterized in that** the sensor unit (39) is non-rotatably connected to the at least one display element (27).

8. Electronic rotary encoder (17) in accordance with any one of Claims 6 or 7, **characterized in that** the rotary encoder (17) has an actuating element (42) designed so that it can be actuated by hand, and a memory, and that when the actuating element (42) is actuated, the electric and/or magnetic image (77) of the pointer (7) measured at the point in time of actuation is stored in the evaluation unit (41).

9. Electronic rotary encoder (17) in accordance with any one of Claims 7 or 8, **characterized in that** the evaluation unit (41) is designed to compare the stored electric and/or magnetic image (77) of the pointer (7) with a currently measured electric and/or magnetic image (77) of the pointer (7) and in the event of correspondence of a stored electric and/or magnetic image (77) of the pointer (7) with the current electric and/or magnetic image (77) of the pointer (7) to signal that the at least one stored switching point (30) has been reached.

10. Electronic rotary encoder (17) in accordance with any one of Claims 1 to 9, **characterized by** a glass cover (13) for a pointer instrument (1) on which the electronic rotary encoder (17) is mounted.

11. Procedure for the contactless detection of an angle position of the pointer (7) of a pointer instrument (1) with a sensor unit (39), **characterized in that** the angle position of the pointer (7) is detected from the front side (2) of the pointer instrument (1) as an electric and/or magnetic measured quantity and only the pointer (7) itself is used as an encoder means (8), whereby the detection of the encoder means (8) is effected in such a way that an image of the pointer (7) is detected with the help of measurement sectors (49) of the sensor unit (39) positioned along a measuring circumference.

12. Procedure for the contactless detection of an angle position of the pointer (7) in accordance with Claim 11, **characterized in that** an image of the pointer (7) is detected in a reference position and stored before measurement takes place.

13. Procedure for the contactless detection of an angle position of the pointer (7) in accordance with Claim 12, **characterized in that** the temporary storage of one or more images of the pointer (7) is provided for, so that the stored images of the pointer (7) can be used for interpolation and/or standardization and/or correlation.

14. Procedure for the contactless detection of an angle position of the pointer (7) in accordance with Claim 13, **characterized in that** the correlation between a stored image of the pointer (7) and a currently measured image of the pointer (7) is effected and evaluated to determine whether a switching point has been reached.

15. Procedure for the contactless detection of an angle position of the pointer (7) in accordance with Claim 14, **characterized in that** the output of a switching point signal is initiated when the switching point is reached.

## Revendications

1. Détecteur angulaire électronique (17) pour des instruments à aiguille (1) présentant une aiguille (7), à regarder d'une face (2), avec une unité de détecteur (39) pour une détection sans contact d'une position angulaire de l'aiguille (7) **caractérisé en ce que** l'unité de détecteur (39) présente des secteurs de mesure (49) disposés le long de l'étendue de mesure qui sont conçus pour mesurer une représentation électrique et/ou magnétique de l'aiguille (7) et que le détecteur angulaire (17) est conçu pour pouvoir être placé sur une face (2) de l'instrument à aiguille (1) et que l'unité de détecteur (39) est conçue de manière à utiliser uniquement l'aiguille (7) comme transmetteur, la mesure étant effectuée de manière capacitive, inductive ou magnétique.

2. Détecteur angulaire électronique (17) selon la revendication 1 **caractérisé en ce que** la mesure est effectuée de manière capacitive et que les secteurs de mesure (49) sont alignés radialement par rapport à l'axe du palier (15) de l'aiguille (7).

3. Détecteur angulaire électronique (17) selon l'une des revendications précédentes **caractérisé en ce que** les secteurs de mesure (49) directement adjacents sont disposés radialement les uns par rapport aux autres et/ou se chevauchent dans la direction circonférentielle.

4. Détecteur angulaire électronique (17) selon l'une des revendications 1 à 3 **caractérisé en ce que** deux secteurs de mesure (49) adjacents sont disposés de manière à être couverts au moins partiellement dans chaque position angulaire par l'aiguille (7).

5. Détecteur angulaire électronique (17) selon l'une des revendications 1 à 4 **caractérisé en ce que,** à l'intérieur d'une plage prédéterminée à une position angulaire quelconque de l'aiguille (7), un point de commutation (30) est réglable qui atteint par l'aiguille (7) déclenche la sortie d'un signal de point de commutation via une interface de sortie (25).

6. Détecteur angulaire électronique (17) selon la revendication 5 **caractérisé en ce qu'au** moins un élément d'affichage (27) est prévu pour afficher et/ou régler le point de commutation (30) et qu'au moins un élément d'affichage (27) est conçu de manière pivotante.

7. Détecteur angulaire électronique (17) selon la revendication 6 **caractérisé en ce que** l'unité de détecteur (39) est reliée de manière solidaire en rotation avec au moins un élément d'affichage (27).

8. Détecteur angulaire électronique (17) selon l'une des revendications 6 ou 7 **caractérisé en ce que** le détecteur angulaire (17) présente un élément de commande (42) conçu pour pouvoir être actionné et une mémoire et que lors de l'actionnement de l'élément de commande (42) la représentation électrique et/ou magnétique (77) de l'aiguille (7) mesurée au moment de l'actionnement est mémorisée dans l'unité d'évaluation (41).

9. Détecteur angulaire électronique (17) selon l'une des revendications 7 ou 8 **caractérisé en ce que** l'unité d'évaluation (41) est conçue pour comparer la représentation électrique et/ou magnétique (77) de l'aiguille (7) mémorisée avec une représentation électrique et/ou magnétique (77) de l'aiguille (7) actuellement mesurée et, en cas de concordance d'une représentation mémorisée avec la représentation électrique et/ou magnétique (77) de l'aiguille (7), de signaler l'atteinte d'au moins un point de commutation mémorisé (30).

10. Détecteur angulaire électronique (17) selon l'une des revendications 1 à 9 **caractérisé par** un verre de protection (13) pour un instrument à aiguille (1) sur lequel est fixé le détecteur angulaire électronique (17).

11. Procédure pour la détection sans contact d'une position angulaire de l'aiguille (7) d'un instrument à aiguille (1) avec une unité de détection (39) **caractérisée en ce que** la position angulaire de l'aiguille (7) est détectée par la face (2) de l'instrument à aiguille (1) sous forme d'une grandeur mesurée électrique et/ou magnétique et qu'uniquement l'aiguille (7) est utilisée elle-même comme transmetteur (8), la détection du transmetteur (8) ayant lieu de manière à ce qu'une représentation de l'aiguille (7) est détectée au moyen des secteurs de mesure (49) de l'unité de détecteur (39) disposés le long de l'étendue de mesure.

12. Procédure pour la détection sans contact d'une position angulaire de l'aiguille (7) selon la revendication 11 **caractérisée en ce qu'**avant la mesure, une représentation de l'aiguille (7) est détectée et mémorisée dans une position de référence.

13. Procédure pour la détection sans contact d'une position angulaire de l'aiguille (7) selon la revendication 12 **caractérisée en ce qu'**une mémorisation temporaire d'une ou de plusieurs représentations de l'aiguille (7) est prévue si bien que les représentations de l'aiguille (7) mémorisées sont utilisées pour l'interpolation et/ou la normalisation et/ou la corrélation.

14. Procédure pour la détection sans contact d'une position angulaire de l'aiguille (7) selon la revendication 13 **caractérisée en ce que** la corrélation d'une représentation mémorisée de l'aiguille (7) a lieu avec une représentation actuellement mesurée et est évaluée pour savoir si un point de commutation a été atteint.

15. Procédure pour la détection sans contact d'une position angulaire de l'aiguille (7) selon la revendication 14 **caractérisée en ce qu'**une sortie d'un signal du point de commutation est initiée lors de l'atteinte du point de commutation.
